Europäisches Patentamt

European Patent Office

Office européen des brevets

(19)

(11) Numéro de publication : **0 382 286 B1**

(12) **FASCICULE DE BREVET EUROPEEN**

(45) Date de publication du fascicule du brevet :
**01.04.92 Bulletin 92/14**

(51) Int. Cl.⁵ : **F24C 1/08,** F24C 3/04,
F23Q 9/04, A01K 31/20,
F24C 3/12

(21) Numéro de dépôt : **90200218.7**

(22) Date de dépôt : **30.01.90**

(54) **Appareil de chauffage du type infrarouge.**

(30) Priorité : **07.02.89 FR 8901720**

(43) Date de publication de la demande :
**16.08.90 Bulletin 90/33**

(45) Mention de la délivrance du brevet :
**01.04.92 Bulletin 92/14**

(84) Etats contractants désignés :
**AT BE DE DK ES FR GB IT NL**

(56) Documents cités :
**EP-A- 0 035 797
FR-A- 1 444 893
FR-A- 2 476 802
GB-A- 2 091 869
US-A- 3 505 976
US-A- 4 452 225**

(73) Titulaire : **CENTRE D'ETUDE ET DE
REALISATIONS D'EQUIPEMENT ET DE
MATERIEL (C.E.R.E.M.) S.A.R.L.
Lieu-dit "Villeneuve"
F-47310 Laplume (FR)**

(72) Inventeur : **Sirand, Joseph
Lieudit "Villeneuve"
F-47310 Laplume (FR)**

(74) Mandataire : **Barre, Philippe
Cabinet Barre-Gatti-Laforgue 95 rue des
Amidonniers
F-31069 Toulouse Cédex (FR)**

## Description

L'invention concerne un appareil de chauffage du type infrarouge et s'applique en particulier à un appareil de chauffage destiné au secteur agricole pour le chauffage directionnel vers le sol des bâtiments d'élevage.

Les appareils de chauffage du type infrarouge sont actuellement d'une utilisation courante et sont employés à des fins diverses, tel que le ramollissement d'une chaussée carrossable comme décrit dans le brevet EP-A-0035797, ou le chauffage de locaux de faibles volumes au moyen d'un appareil de chauffage portable, comme décrit dans le brevet US 4.452.225. De tels appareils conçus pour produire une quantité donnée de calories à haute température sont particulièrement adaptés à leur application spécifique.

Les appareils de chauffage du type infrarouge sont également utilisés à l'heure actuelle pour le chauffage de bâtiments d'élevage dans le secteur agricole, application pour laquelle des appareils très spécifiques ont du être mis au point. En effet, le chauffage des bâtiments d'élevage impose des contraintes techniques que ne peuvent satisfaire les appareils ci-dessus mentionnés : production de chaleur régulable en fonction des besoins zootechniques, implantation dans des atmosphères très poussiéreuses... Pour répondre à ces exigences, deux types principaux d'appareil ont été mis au point.

Le premier type d'appareil comprend principalement un conduit d'alimentation en mélange air/gaz comportant une entrée d'air munie d'un filtre, et un injecteur de gaz. Ce conduit débouche dans une chambre cylindrique en grille réfractaire disposée horizontalement sous un réflecteur. En outre, une grille anti-retour de flamme est disposée à l'entrée de la chambre cylindrique. La régulation de la production de chaleur est quant à elle obtenue en faisant varier le débit de gaz alimentant cet appareil qui est conçu pour fonctionner dans une plage très large de puissance. Toutefois, l'utilisation de tels appareils a révélé plusieurs inconvénients.

En premier lieu, lorsque l'appareil fonctionne à pleine puissance, le bruit de claquement répété de la flamme est très important et ne s'atténue qu'après une baisse de régime de l'ordre de 50 %.

En outre, la position horizontale de la flamme en torche dans le cylindre dirige la chaleur radiante, pour 50 % vers la surface haute du cylindre et l'émission infrarouge produite par cette moitié haute du cylindre rayonne à l'intérieur, vers le fond du réflecteur, au lieu de se diriger directement vers l'extérieur du réflecteur. De plus, quand le régime baisse, la torche du chalumeau lèche de préférence la moitié haute du cylindre horizontal, c'est-à-dire la surface non dirigée vers l'extérieur du réflecteur, et la moitié basse du cylindre devient de moins en moins rayonnante. Ensuite, si le régime baisse encore, seule la partie haute du cylindre proche du tube de sortie de la petite torche restante reçoit une quantité de chaleur résiduelle qui perd, en raison de la conduction à tout le cylindre, le niveau de température nécessaire à une bonne émission infrarouge lumineuse même résiduelle. Ce dernier inconvénient est un handicap dans le cas de certaines espèces de volailles et de gibier, qui requièrent en même temps qu'un minimum de radiation, un repère lumineux les protégeant d'un comportement grégaire allant jusqu'à l'étouffement en nombre, à force de s'entasser les uns sur les autres dans l'obscurité.

Enfin, cet appareil nécessite la présence d'un filtre, interposé sur l'entrée d'air de la conduite d'alimentation, afin d'éviter que la grille anti-retour ne soit colmatée par les poussières aspirées. Or, ce filtre nécessite un entretien extrêmement fréquent en vue d'éviter son colmatage.

Le deuxième type d'appareil, décrit dans le brevet FR 2.620.799 au nom du déposant, relève d'une technologie différente et comporte principalement un réflecteur dans lequel est intégrée une plaque radiante en céramique, associée à une chambre de mélange. Un tel appareil offre une très bonne fiabilité de fonctionnement dans une large plage de puissance et ne présente donc pas les défauts de l'appareil ci-dessus décrit. Toutefois, cette fiabilité de fonctionnement est obtenue au prix d'une technologie beaucoup plus sophistiquée (circuit de veilleuse...) que celle des appareils précités, et par conséquent d'une augmentation du coût de revient de ce type d'appareil de chauffage.

La présente invention vise à pallier les inconvénients de appareils du type infrarouge utilisés pour le chauffage des bâtiments d'élevage et a pour principal objectif de fournir un appareil de chauffage de conception très simple, fonctionnant dans une très large plage de puissance et présentant, de plus, la particularité de rester émetteur de rayons infrarouges quel que soit le régime de puissance.

Un autre objectif de l'invention est de fournir un appareil de chauffage fonctionnant sans filtre sur l'entrée d'air.

Un autre objectif de l'invention est de fournir un appareil de chauffage permettant d'obtenir, au sol et à tout régime, un rayonnement idéal.

Un autre objectif de l'invention est de fournir un appareil de chauffage d'entretien très facile, car lavable à l'eau autant intérieurement qu'extérieurement.

Un autre objectif de l'invention est de fournir un appareil de chauffage n'engendrant pas de bruits de claquement lors de son fonctionnement.

A cet effet, l'invention vise un appareil de chauffage du type infrarouge, notamment destiné au secteur agricole pour le chauffage directionnel vers le sol de bâtiments d'élevage, ayant

– une conduite d'alimentation dotée d'une embouchure d'entrée d'air,

– une valve de sécurité dotée d'une entrée adaptée pour être reliée à des moyens d'alimentation en gaz et d'une sortie reliée à la conduite d'alimentation par un conduit d'injection de gaz, ladite valve étant dotée d'un organe de maintien de son clapet en position ouverte, organe asservi à un détecteur de température, et d'un organe d'ouverture, notamment un bouton manuel, permettant d'engendrer l'ouverture dudit clapet, caractérisé en ce qu'il comprend en combinaison :

– une coupole de réflection, dotée d'une ouverture d'entrée de mélange air/gaz, solidarisée sur la conduite d'alimentation vers une extrémité de cette dernière, et disposée sensiblement concentriquement par rapport à ladite conduite,

– une première chambre, dite chambre principale de combustion, présentant une forme conique, pointe vers le bas, et disposée à l'intérieur de la coupole sensiblement concentriquement par rapport à cette dernière, ladite chambre comportant une paroi, dite de base, assujettie vers l'extrémité de la conduite d'alimentation et dotée d'une ouverture d'entrée du mélange, et une paroi conique en un matériau conducteur perforé, résistant à la chaleur, dotée d'une base assujettie à la paroi de base,

– une deuxième chambre, dite pré-chambre de diffusion, disposée dans la chambre principale de combustion et constituée d'une paroi, en un matériau résistant à la chaleur, perforée de tous présentant une dimension maximale d'ouverture inférieure à 1,5 mm, ladite paroi présentant une forme conique, pointe vers le bas, d'angle au somme inférieur à celui de la paroi conique de la chambre principale, et comportant une base de diamètre légèrement supérieure à celui de la conduite d'alimentation, assujettie à la paroi réfractaire de base sensiblement concentriquement par rapport à cette conduite,

– des moyens d'étanchéité disposés au niveau de la base de la paroi conique de la pré-chambre de diffusion et adaptés pour interdire tout passage du mélange en combustion dans la chambre principale de combustion à l'intérieur de ladite pré-chambre de diffusion.

Un tel appareil de chauffage présente le gros avantage de rester émetteur de rayons infrarouges quel que soit le régime de puissance.

En effet, à haut régime, la pré-chambre de diffusion assure, par ses perforations, la projection du mélange air/gaz en combustion sur la paroi conique de la chambre principale qui se trouve portée au rouge. En outre, grâce à cette pré-chambre de diffusion qui assure la décompression de ce mélange et sa répartition, l'appareil fonctionne sans engendrer de bruits de claquement.

De plus si le régime baisse, et notamment à bas régime, la pré-chambre de diffusion prend le relais de l'émission infrarouge car la force de projection du flux de mélange en combustion baissant, cette combustion devient plus faible entre la chambre principale de combustion et la pré-chambre de diffusion et se rapproche de cette dernière. Cette pré-chambre de diffusion devient alors l'émetteur infrarouge et lumineux de bas régime.

En outre, quel que soit le régime de fonctionnement, bas ou haut régime, les formes respectives de la coupole et des parois des chambre principale de combustion et pré-chambre de diffusion permet d'obtenir, au sol, un rayonnement idéal selon des cercles concentriques.

Enfin, au régime ralenti, la combustion du mélange air/gaz s'effectue toujours à l'extérieur de la pré-chambre de diffusion, mais une portion de la surface de la paroi conique de cette pré-chambre reste portée au rouge. Par conséquent, le peu de poussière aspiré au régime ralenti se trouve pyrolisé. De plus, la présence de ce repère lumineux présente l'avantage de protéger les animaux contre leur comportement grégaire qui les pousse à s'entasser les uns sur les autres jusqu'à l'étouffement en nombre, dans l'obscurité.

Par ailleurs, la taille limitée des perforations de la paroi conique de la pré-chambre de diffusion, et les moyens d'étanchéité, sont adaptés pour que cette paroi conique assure une fonction anti-retour de flamme et empêche, à bas régime et au ralenti, que la combustion entre la chambre principale et la pré-chambre ne communique sa flamme au mélange air/gaz non enflammé à l'intérieure de cette pré-chambre.

De ce fait, les risques de combustion interne à l'intérieur de la pré-chambre de diffusion se trouvent éliminés. Cette caractéristique constitue en facteur déterminant du fonctionnement de l'appareil. En effet, toute combustion interne à l'intérieur de la pré-chambre de diffusion entraînerait une détérioration rapide de la paroi conique de cette pré-chambre, due à une élévation de température au-dessus de son point d'oxydation. De plus, une telle combustion interdirait un réamorçage de la combustion à l'intérieur de la chambre principale de combustion.

En outre, cette caractéristique permet de faire fonctionner l'appareil en toute sécurité sans nécessiter la présence classique d'une grille plate circulaire anti-retour de flamme à la sortie de la conduite d'alimentation. Cette particularité, associée au fait que la poussière aspirée se trouve pyrolisée quel que soit le régime, comme explicité plus loin, d'une part, rend inutile la présence d'un filtre sur l'embouchure d'entrée d'air et, d'autre part, permet de laver l'appareil à l'eau autant intérieurement qu'extérieurement.

Par ailleurs, la paroi réfractaire de base qui participe au rayonnement de la chaleur vers le bas, peut être constituée par le fond plat de la coupole. Toutefois, cette paroi de base sera préférentiellement assujettie vers l'extrémité de la conduite d'alimentation de façon à délimiter avec la coupole un volume de circulation de gaz brûlés et d'air chaud secondaire, cette coupole étant dotée d'une ouverture d'évacuation de ces gaz brûlés et air chaud.

Selon un autre caractéristique de l'invention, le rapport entre les angles au sommet des parois coniques respectives de la chambre principale de radiation et de la pré-chambre de diffusion est sensiblement compris entre 3,5 et 4,5, et lesdites parois coniques présentent une hauteur sensiblement identique.

Ces caractéristiques dimensionnelles des parois coniques respectives de la pré-chambre de diffusion et de la chambre principale de combustion, sont adaptées pour que le flux de mélange soit projeté sur la paroi conique radiante de la chambre principale de combustion, selon une moyenne de résultantes orthogonale à la surface de cette paroi conique, ces résultantes étant réparties sur toute cette surface. De ce fait, cette paroi conique est uniformément portée au rouge et fournit un rayonnement infrarouge idéal.

D'autres caractéristiques, buts et avantages de l'invention se dégageront de la description détaillée qui suit en référence aux dessins annexés qui présentent un mode de réalisation d'appareil de chauffage ainsi que deux modes de réalisation préférentiels de vannes commandées conçues pour équiper cet appareil. Sur ces dessins qui font partie intégrante de la présente description :

– la figure 1 est une vue en perspective, avec une partie arrachée, d'un appareil de chauffage conforme à l'invention,

– la figure 2 en est une vue latérale partiellement en coupe longitudinale par un plan A,

– la figure 3 est une coupe longitudinale, à échelle agrandie, d'un premier mode de réalisation de vanne commandée conçue pour équiper un appareil de chauffage conforme à l'invention,

– la figure 4 est une coupe longitudinale, à échelle agrandie, d'un deuxième mode de réalisation de vanne commandée conçue pour équiper cet appareil de chauffage.

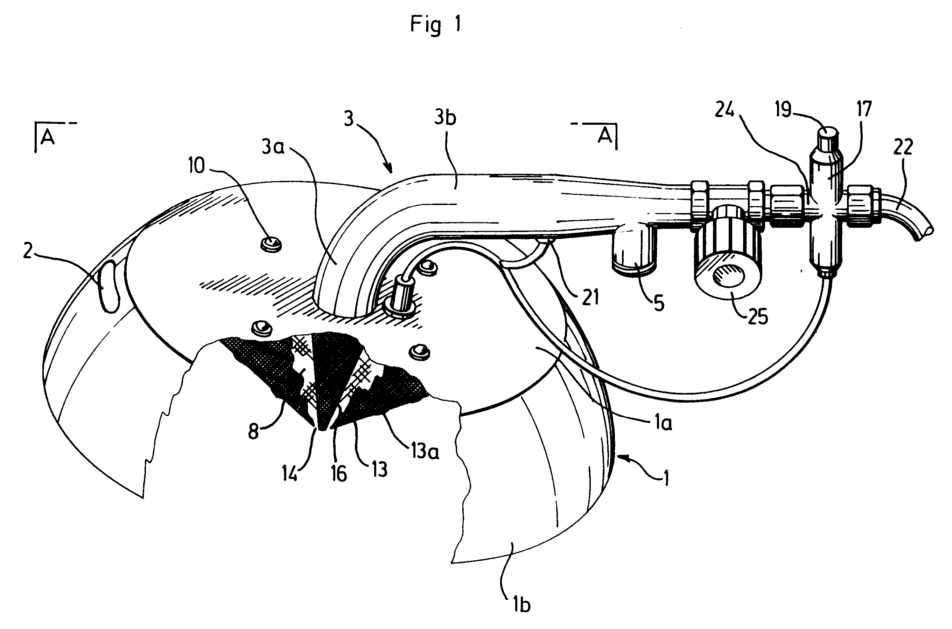

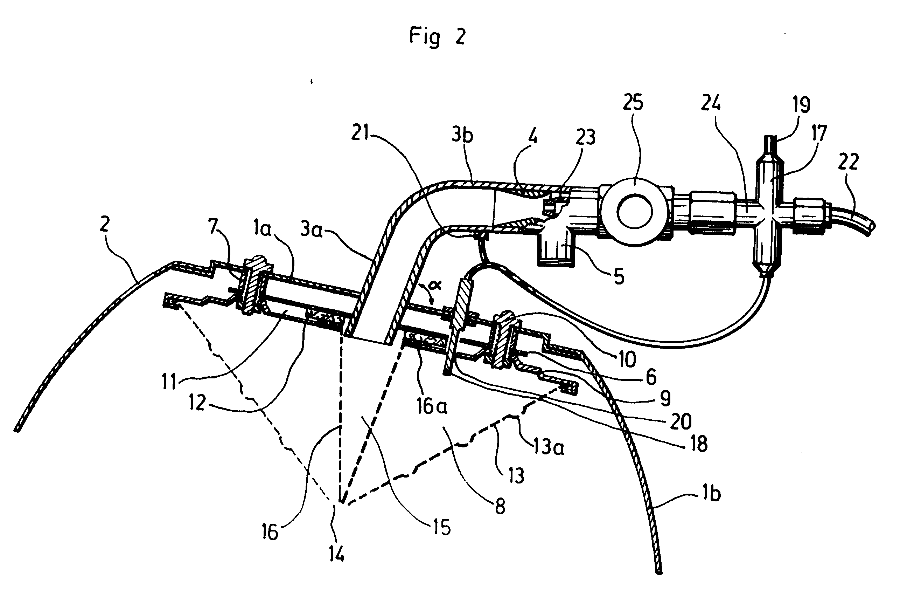

L'appareil de chauffage représenté aux figures 1 et 2 est destiné au secteur agricole pour le chauffage directionnel vers le bas de bâtiments d'élevage. Cet appareil est destiné à être alimenté en gaz, soit individuellement au moyen d'une bouteille de gaz tel que du propane, soit au moyen d'une citerne alimentant une batterie d'appareils disposés en série. Le gaz naturel ou de ville convient également, mais, pour un fonctionnement sur une grande plage de régime variable, il convient de prévoir une pression minimum délivrée de l'ordre de 150 mbars.

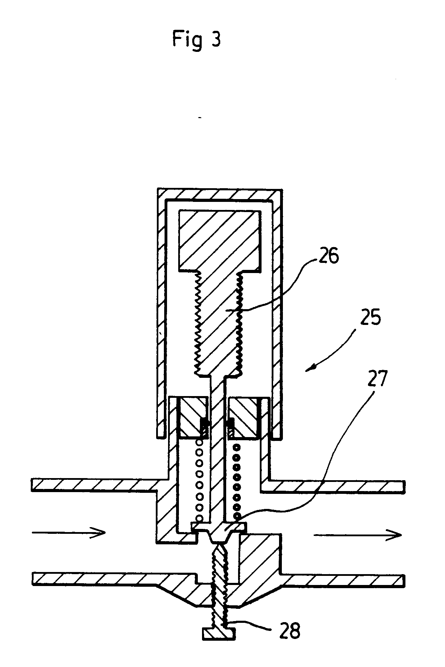

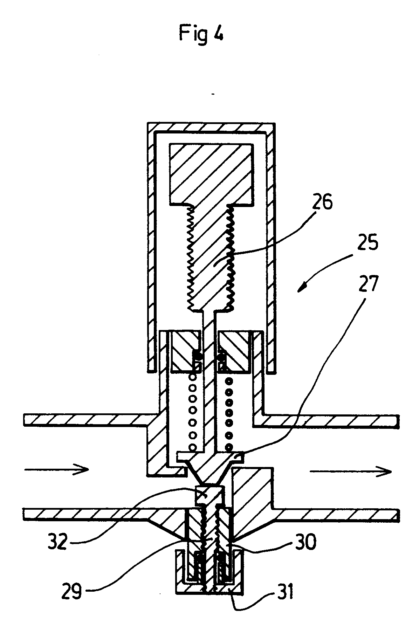

En outre, le fonctionnement de cet appareil est régulé au moyen d'une vanne commandée telle que représentée aux figures 3 et 4. Cette régulation peut également être soit individuelle, une vanne commandée équipant chaque appareil, soit centralisée au niveau d'un tableau de commande gérant le fonctionnement d'une batterie d'appareils, la vanne commandée étant alors déportée sur ce tableau.

Chaque appareil comprend, en premier lieu, un réflecteur 1 se présentant sous la forme d'une coupole dotée d'un fond plat 1a et d'une paroi périphérique parabolique 1b. Cette coupole 1 est destinée à être suspendue au-dessus de l'emplacement choisi à l'aide d'organes-supports connus en soi (non représentés), adaptés pour la maintenir inclinée d'un angle de dix degrés par rapport à l'horizontale.

La paroi périphérique 1b de cette coupole est en outre percée d'une ouverture 2 ménagée à proximité du fond plat 1a, et destinée à être disposée en position haute lors du fonctionnement de l'appareil en vue de permettre l'évacuation des gaz consumés et la circulation de l'air secondaire de convection.

En outre, chaque appareil comprend une conduite 3 d'alimentation en mélange air/gaz sur le tronçon d'extrémité de laquelle le fond plat 1a de la coupole 1 est solidarisé par soudure. Cette conduite 3 est dotée, de façon classique, d'un élément Venturi 4 et d'une embouchure d'entrée 5 pour l'air de combustion primaire.

Elle se présente sous la forme d'une pipe coudée à 110° dont une des branches 3a pénètre partiellement dans la coupole 1 au travers d'un orifice central ménagé dans le fond plat 1a de cette dernière et forme un angle $\alpha$ de 80° avec ce fond plat. Cet angle de 110° est notamment adapté pour que la deuxième branche 3b de cette pipe s'étende horizontalement dans la position de fonctionnement de l'appareil.

A l'intérieur de la coupole 1, l'appareil comporte en premier lieu une collerette 6 soudée sur le pourtour de la pipe d'alimentation 3 de façon à s'étendre parallèlement au fond plat 1a et à délimiter avec ce dernier un volume de circulation d'air en partie supérieure du réflecteur.

Cette coupole 1 renferme également les organes de diffusion, de combustion et de radiation constitués d'une chambre principale de combustion et d'une pré-chambre de diffusion du mélange air/gaz.

La chambre principale de combustion 8 présente une forme conique, pointe vers le bas, et est disposée concentriquement par rapport à la pipe 3. Elle comporte une paroi de base circulaire 9 sensiblement plane, en matériau réfractaire, dotée d'une ouverture centrale de diamètre supérieur à celui de la pipe 3, pour le passage de l'extrémité de cette dernière. Cette paroi de base 9 est en outre conformée de façon à présenter une nervure circulaire par laquelle elle vient s'accoler à la collerette 6.

Cette paroi de base 9 est solidarisée à la paroi de fond 1a de la coupole 1 au moyen de boulons 10 dont les vis s'étendent au travers d'alésages percés en regard dans ladite paroi de fond 1a, ladite paroi de base 9 au droit de sa nervure, et la collerette 6. En outre, pour chacun des boulons 10, une entretoise tubulaire 7 est disposée entre la paroi de fond 1a de la coupole 1 et la collerette 6 afin d'éviter toute déformation de cette collerette 6 et de la paroi de base 9, lors du serrage.

Enfin la collerette 6 et la paroi de base 9, de par la présence de la nervure, délimitent entre elles un volume interne 11 à l'intérieur duquel est compressé un joint d'étanchéité 12 en fibre réfractaire inséré sur le pourtour de la pipe 3.

La chambre principale de combustion 8 comporte, par ailleurs, une paroi conique de radiation 13 assujettie de façon souple pour permettre sa dilation, au niveau de sa base, sur le pourtour de la paroi de base 9. Cette paroi conique 13, réalisée en tôle réfractaire perforée à 30 à 40 % de trous circulaires d'un diamètre sensiblement égal à 2 mm, présente un angle au sommet égal à 110°.

En outre, cette paroi conique 13 est conformée de façon à présenter des nervures 13a circulaires réparties sur sa hauteur et destinées à renforcer sa rigidité à chaud. Enfin, le sommet de cette paroi conique 13 est tronqué de façon que la chambre principale de radiation 8 présente un orifice 14 à son extrémité basse.

La pré-chambre de diffusion 15 est disposée à l'intérieur de la chambre principale de combustion 8 et disposée concentriquement par rapport à la pipe 3 de façon à s'étendre dans le prolongement de celle-ci.

Elle est constituée d'une paroi conique 16 adaptée pour devenir radiante, réalisée en tôle réfractaire perforée à environ 25 % de trous circulaires d'un diamètre sensiblement compris entre 0,8 mm et 1 mm. Cette paroi conique 16 présente, en outre, un angle au sommet de 27°.

Cette paroi conique, dont la base présente un diamètre légèrement supérieur à celui de la pipe 3, est solidarisée au niveau de cette base sur la paroi de base 9 de la chambre principale de radiation 8. A cet effet, elle présente, au niveau de sa base, un rebord plan périphérique 16a maintenu serré entre la face supérieure de la paroi de base 9 et le joint d'étanchéité 12 comprimé entre cette paroi de base 9 et la collerette 6.

En dernier lieu, la hauteur de la paroi conique 16 est adaptée pour que son sommet affleure l'ouverture 14 de la chambre principale de combustion 8.

Enfin, il est à noter que la collerette 6 est fixée sur la pipe 3, et la paroi de base 9 conformée, de façon que l'extrémité de cette pipe débouche sur une longueur de l'ordre de 2 mm, à l'intérieur de la pré-chambre de diffusion 15. Cette disposition vis à éliminer, lors de l'extinction de l'appareil, après usage, tout effet de post-combustion du résidu final de mélange air/gaz tombant à la pression zéro, à l'intérieur de la pipe 3.

Sur cet appareil est par ailleurs assujetti un ensemble d'organes dont, en premier lieu, une valve de sécurité 17 à bobine thermo-électromagnétique de maintien de son clapet en position ouverte. Cette valve 17 est associée à un thermo-couple 18 dit à interrupteur, et est dotée d'un bouton manuel 19 qui permet d'engendrer manuellement l'ouverture de son clapet à chaque mise en service.

Le thermo-couple 18 est assujetti sur la coupole 1 de façon que son élément sensible s'étende dans la chambre principale de combustion 8, à proximité de la paroi de fond 9 et de la base de la pré-chambre de diffusion 15. A cet effet, le fond plat 1a de la coupole 1 est doté d'un orifice en boutonnière au niveau duquel est solidarisé le thermo-couple 18. De même, la collerette 6 et la paroi de base 9 sont également percées d'orifices 20 au travers desquels est introduit le thermo-couple 18, ces orifices 20 étant d'un diamètre suffisant pour permettre un refroidissement rapide de l'élément sensible en cas de mise en sécurité après extinction.

Le thermo-couple 18 est par ailleurs associé à un thermostat haute température 21 disposé sur la branche horizontale 3b de la pipe d'alimentation. Ce thermostat 21 a une fonction de coupe-circuit destiné à engendrer la fermeture de la valve de sécurité 17 en cas d'élévation anormale de la température et d'allumage interne à l'intérieur de la pipe 3, provoqués par une détérioration accidentelle des performations calibrées de la paroi conique 16 ou du joint d'étanchéité 12.

Enfin, et de façon classique, l'entrée de la valve de sécurité 17 est branchée sur une canalisation d'alimentation en gaz 22, et sa sortie est reliée à un injecteur 23 disposé au niveau de l'embouchure d'entrée d'air 5 de la pipe d'alimentation 3, par un conduit d'injection 24.

En dernier lieu, chaque appareil est doté d'une vanne commandée 25 qui dans l'exemple des figures 1 et 2 est interposée sur le conduit d'injection de gaz 24. Cette vanne commandée est constituée d'une vanne thermostatique 25 comportant, de façon classique, une capsule thermostatique à fluide dilatable 26 agissant sur un clapet 27.

Selon l'invention, cette vanne thermostatique 25 présente la particularité d'être dotée d'un dispositif d'ouverture minimale destiné à empêcher la fermeture complète de son clapet. Tel que représente aux figures 3 et 4, ce dispositif peut se présenter selon deux versions : une version à débit minimal de gaz choisi par le constructeur et non réglable (figure 3), et une version à débit minimal de gaz variable, adjustable par l'utilisateur (figure 4).

Le dispositif de la vanne thermostatique 25 représentée à la figure 3 comporte une vis 28 introduite dans le corps de cette vanne, en regard du clapet 27. Cette vis 28 est agencée pour servir de butée au clapet 27 de façon à empêcher sa fermeture totale et ainsi garantir le passage d'un débit minimal de gaz.

En outre, afin d'assurer l'étanchéité du filetage et le blocage de la position de la vis, une fois le réglage effectué, le filetage de cette dernière est enduit d'un produit d'étanchéité et de blocage assurant son immobilisation définitive par rapport au corps de la vanne 25.

Le dispositif de la vanne thermostatique 25 représentée à la figure 4 comporte, quant à lui, une bague-écrou 30 insérée dans le corps de la vanne en regard du clapet 27, et à l'intérieur de laquelle est engagée une vis 29. Cette vis 29, dotée d'un dispositif classique d'étanchéité par joints, comprend, au niveau de son extrémité externe, une molette de réglage 31 permettant de régler manuellement sa position, et par conséquent de modifier le débit minimal de gaz.

Au niveau de son extrémité interne, cette vis 29 est en outre dotée d'une butée 32 adaptée pour limiter la course de fermeture du clapet 27 et garantir, dans la position extrême de descente de ce clapet, un débit de gaz minimal.

Les divers organes de l'appareil de chauffage conforme à l'invention ayant été décrits, son fonctionnement est décrit ci-après.

L'appareil de chauffage étant supposé en état d'extinction complète, l'allumage est réalisé en présentant une flamme au droit de l'orifice 14 de la chambre principale de diffusion 8 et en actionnant le bouton manuel 19 de la vanne de sécurité 17. Il est à noter que, grâce à l'orifice 14, l'allumage entre chambre 8 et pré-chambre 15 est obtenu facilement même à bas régime, c'est-à-dire avec une faible pression de gaz.

Le gaz est alors acheminé par le conduit d'injection 24 vers l'injecteur 23, et le mélange air/gaz projeté dans la chambre principale de combustion 8, après diffusion par la pré-chambre 15, où la présence de la flamme provoque sa combustion. La valve de sécurité 17 est ensuite maintenue ouverte par le thermo-couple 18 aussi longtemps que la combustion est effective dans la chambre principale de combustion 8.

En cours de fonctionnement, le régime de chauffe approprié est obtenu par la variation du débit de gaz et, dans le cas représenté aux figures 1 et 2, au moyen de la vanne thermostatique 25 qui commande la distribution de gaz vers l'injecteur 23. Suivant le régime de chauffe commandé, les caractéristiques de fonctionnement de l'appareil sont alors les suivantes :

En haut régime, le mélange air/gaz non enflammé se trouve projeté, du fait de sa vitesse, à l'extérieur de la pré-chambre de diffusion 15, à travers les perforations de la paroi conique 16 de cette dernière. Cette paroi conique 16 assure du fait de la valeur de son angle au sommet, de ses dimensions, de sa surface totale et de ses perforations, par rapport aux caractéristiques de la paroi conique 13 de la chambre principale 8, une projection dynamique bien orientée qui entre alors en combustion entre la paroi 16 de la pré-chambre de diffusion 15 et la paroi 13 de la chambre de combustion 8. Cette dernière se trouve alors portée au rouge sur toute sa surface.

En effet, la forme respective des deux parois coniques 13 et 16 entraîne une projection du mélange selon une moyenne de résultantes orthogonale à la surface de la paroi conique 13, résultantes réparties sur cette surface. On obtient ainsi au sol un rayonnement idéal selon des cercles concentriques, la coupole 1 contribuant pour sa part à concentrer le rayonnement dans le périmètre au sol recherché, fonction de sa hauteur de suspension.

Par ailleurs, le coude à 110° de la pipe d'alimentation 3 permet de limiter à 80° l'angle mort que délimite avec la paroi de base 9, la branche coudée 3a d'introduction du mélange air/gaz dans la pré-chambre de diffusion 15. Ceci a pour effet de rendre négligeable la dépression créée dans cet angle mort situé dans la partie haute de la pré-chambre de diffusion 15 juste au-dessus de l'extrémité dépassante de la pipe 3, et à proximité de la paroi de fond 9. De ce fait, la pression du mélange air/gaz dans tout le volume de la pré-chambre de diffusion 15 est sensiblement uniforme et ne perturbe pas la régularité du rougissement de la totalité de la paroi conique radiante 13 de la chambre de combustion 8.

En bas régime, la force de projection du mélange de combustion baissant, cette combustion est plus faible entre la chambre principale 8 et la pré-chambre de diffusion 15 et se rapproche de la paroi conique 16 de cette dernière. Au fur et à mesure que l'émission infrarouge de la paroi 13 de la chambre principale 8 diminue, celle de la paroi 16 augmente. Cette paroi 16 rougit donc à son tour et devient l'émetteur infrarouge et lumineux en bas régime.

L'appareil reste donc émetteur de rayons infrarouges, même à bas régime, les formes respectives de la coupole 1 et de la paroi conique 16 permettant d'obtenir au sol, au rayonnement idéal selon des cercles concentriques. Un miroir placé au sol sous l'appareil permet d'ailleurs d'observer la parfaite réflexion par la coupole de la partie rouge du spectre émis par la paroi conique 16.

Enfin, en régime ralenti, la combustion du mélange air/gaz s'effectue toujours à l'extérieur de la pré-chambre de diffusion 15 mais la portion basse de la surface de la paroi conique 16 reste portée au rouge, sur environ sur 2 cm à partir de l'extrémité de la pointe.

La présence d'un repère lumineux protège les animaux, dans le cas de certaines espèces de volailles et de gibiers, contre leur comportement grégaire qui les pousse à s'entasser les uns sur les autres jusqu'à l'étouffement en nombre, dans l'obscurité. Il est à noter à cet effet que le dispositif de réglage minimum de la vanne thermostatique 25 permet de régler le régime de ralenti, selon les espèces d'animaux, de façon à obtenir une source lumineuse plus ou moins importante.

Il est à noter également que c'est à bas régime et au ralenti que la taille des perforations circulaires de la paroi conique 16 de la pré-chambre de diffusion 15, est un facteur déterminant du fonctionnement de l'appareil. En effet, à bas régime et au ralenti, la combustion entre la chambre 8 et la pré-chambre 15, très proche de la paroi conique 16, ne doit en aucun cas communiquer sa flamme au mélange air/gaz non enflammé à l'intérieur de la pré-chambre 15, même si la pression de diffusion se trouve à la valeur minimale pour laquelle l'appareil a été conçu. La taille des perforations est donc limitée à une diamètre maximal adapté pour que la paroi 16 assure la fonction anti-retour de flamme à l'intérieur de la pré-chambre 15 et empêche l'amorçage d'une combustion interne à l'intérieur de la conduite 3. Ainsi, des perforations d'un diamètre maximal compris entre 0,8 et 1 mm permettent à l'appareil de fonctionner avec une pression minimale de 3 à 10 mbars selon la pression nominale de fonctionnement.

De ce fait, l'appareil peut fonctionner en toute sécurité sans nécessiter la présence classique d'une grille plate circulaire anti-retour de flamme à la sortie de la branche 3a de la conduite 3.

Cette particularité offre un avantage important car l'appareil peut fonctionner sans filtre à air pour les quatre raisons suivantes, malgré la poussière extrêmement importante en élevage (duvets, plumes, paille, copeaux, farine, etc...).

En premier lieu, il ne nécessite pas de grille plate circulaire susceptible de s'encrasser dans une zone "froide" de l'appareil, à savoir la sortie de la conduite 3 ventilée par le mélange air/gaz non enflammé.

Ensuite, et pour les trois autres raisons ci-dessous, que ce soit à haut régime, à bas régime ou au ralenti, la poussière est pyrolisée :

– à haut régime parce que toute perforation de la paroi 16 subissant une tentative de bouchage n'est plus ventilée par le mélange air/gaz traversant, s'élève en température, et devient rouge jusqu'à ce que la particule obstruante soit détruite presque instantanément,

– à bas régime parce que la paroi 16 est portée au rouge sur toute sa surface,

– au ralenti parce que la pointe basse de la paroi 16 reste rouge et le peu de poussière aspiré à ce régime ralenti se trouve ainsi pyrolisé.

Un autre avantage important découle de ces quatre raisons : l'appareil peut être lavé à l'eau autant intérieurement qu'extérieurement sans risquer un colmatage aggravé nécessitant un démontage complet.

En dernier lieu, il est à noter que la disposition de la plaque 9 de la chambre principale 8 présente deux intérêts : d'une part elle assure à la fois la protection thermique du fond plat de la coupole et un circulation de gaz brûlés et d'air chaud secondaire dans le volume qu'elle délimite avec cette paroi de fond 1a, l'évacuation de ces gaz et de cet air s'effectuant par l'ouverture 2 de la coupole 1 ; d'autre part, elle participe au rayonnement vers le bas de la chaleur radiante.

## Revendications

1. Appareil de chauffage du type infrarouge, notamment destiné au secteur agricole pour le chauffage directionnel vers le bas de bâtiments d'élevage, ayant :

– une conduite d'alimentation (3) dotée d'une embouchure (5) d'entrée d'air,

– une valve de sécurité (17) dotée d'une entrée adaptée pour être reliée à des moyens d'alimentation en gaz (22) et d'une sortie reliée à la conduite d'air (3) par un conduit d'injection de gaz (24), ladite valve étant dotée d'un organe de maintien de son clapet en position ouverte, organe asservi à un détecteur de température (18), et d'un organe d'ouverture (19), notamment un bouton manuel, permettant d'engendrer l'ouverture dudit clapet, caractérisé en ce qu'il comprend en combinaison :

– une coupole de réflection (1), dotée d'une ouverture d'entrée de mélange air/gaz, solidarisée sur la conduite d'alimentation (3) vers une extrémité de cette dernière, et disposée sensiblement concentriquement par rapport à ladite conduite,

– une première chambre (8), dite chambre principale de combustion, présentant une forme conique, pointe vers le bas, et disposée à l'intérieur de la coupole (1) sensiblement concentriquement par rapport à cette dernière, ladite chambre comportant une paroi (9), dite de base, assujettie vers l'extrémité de la conduite d'alimentation (3) et dotée d'une ouverture d'entrée du mélange, et une paroi conique (13) en un matériau conducteur perforé, résistant à la chaleur, dotée d'une base assujettie à la paroi de base (9),

– une deuxième chambre (15), dite pré-chambre de diffusion, disposée dans la chambre principale de combustion (8) et constituée d'une paroi (16), en un matériau résistant à la chaleur, perforée de trous présentant une dimension maximale d'ouverture inférieure à 1,5 mm, ladite paroi présentant une forme conique, pointe vers le bas, d'angle au sommet inférieur à celui de la paroi conique (13) de la chambre principale (8), et comportant une base de diamètre légèrement supérieure à celui de la conduite d'alimentation (3), assujettie à la paroi réfractaire de base (9) sensiblement concentriquement par rapport à cette conduite (3),

– des moyens d'étanchéité (12) disposés au niveau de la base de la paroi conique (16) de la pré-chambre de diffusion (15) et adaptés pour interdire tout passage du mélange en combustion dans la chambre principale de combustion (8) à l'intérieur de ladite pré-chambre de diffusion (15).

2. Appareil de chauffage selon la revendication 1, caractérisé en ce que :

– la conduite d'alimentation (3) présente un tronçon d'extrémité débouchant à l'intérieur de la coupole (1), dans la pré-chambre de diffusion (15),

– la paroi de base (9) est constituée d'une paroi réfractaire dotée d'une ouverture d'entrée de mélange air/gaz et assujettie vers l'extrémité de la conduite (3) de façon à délimiter avec la coupole (1) un volume de circulation de gaz brûlés et d'air chaud secondaire,

– la coupole (1) est dotée d'une ouverture (2) d'évacuation des gaz brûlés et de l'air chaud circulant dans le volume précité.

3. Appareil de chauffage selon la revendication 2, caractérisé en ce que :

– la paroi conique (16) de la pré-chambre de diffusion (15) comporte une base dotée d'un rebord périphérique plan (16a) adapté pour reposer sur la paroi de base (9) sur le pourtour de l'ouverture de cette dernière,

– une collerette (6) est disposée dans la coupole (1) et soudée sur la conduite d'alimentation (3), entre ladite coupole et la paroi de base (9) de façon à délimiter avec cette dernière un volume interne autour de la conduite (3),

– les moyens d'étanchéité comprennent un joint d'étanchéité inséré dans le volume interne précité, sur le pourtour de la conduite (3), de façon à être comprimé entre, d'une part, la collerette (6) et, d'autre part, le rebord périphérique (16a) et la paroi de base (9).

4. Appareil de chauffage selon l'une des revendications 1, 2 ou 3, caractérisé en ce que la coupole (1) présente un fond plat (1a), et en ce que la conduite d'alimentation (3) présente la forme d'une pipe coudée à 110°.

5. Appareil de chauffage selon l'une des revendications précédentes, caractérisé en ce que le rapport entre les angles au sommet des parois coniques (13, 16) respectives de la chambre principale de combustion (8) et de la pré-chambre de diffusion (15) est sensiblement compris entre 3,5 et 4,5, et en ce que lesdites parois coniques présentent une hauteur sensiblement identique.

6. Appareil de chauffage selon la revendication 5, caractérisé en ce que l'angle au sommet de la paroi conique (13) de la chambre principale de combustion (8) est sensiblement égal à 110°, et l'angle au sommet de la paroi conique (16) de la pré-chambre de diffusion (15) sensiblement égal à 27°.

7. Appareil de chauffage selon l'une des revendications précédentes, caractérisé en ce que la paroi conique (16) de la pré-chambre de diffusion (15) est perforée de trous circulaires d'un diamètre compris entre 0,8 mm et 1 mm.

8. Appareil de chauffage selon l'une des revendications précédentes, caractérisé en ce que la paroi réfractaire de base (9) est assujettie par rapport à la conduite d'alimentation (3), de façon qu'un tronçon d'extrémité de faible longueur, notamment de l'ordre de 2 mm, débouche dans la pré-chambre de diffusion (15).

9. Appareil de chauffage selon l'une des revendications précédentes, caractérisé en ce que :

– la paroi conique (13) de la chambre principale de combustion (8) présente un sommet tronqué délimitant un orifice (14),

– la paroi conique (16) de la pré-chambre de diffusion (15) présente une hauteur adaptée pour affleurer l'orifice (14) de la chambre principale de combustion (8).

10. Appareil de chauffage selon l'une des revendications précédentes, caractérisé en ce que la paroi conique (13) de la chambre principale de radiation (8) est conformée de façon à présenter des nervures circulaires (13a) réparties sur sa hauteur.

11. Appareil de chauffage selon l'une des revendications précédentes, caractérisé en ce qu'il comprend un thermostat haute température (21) disposé sur la conduite d'alimentation (3) et associé au détecteur de température (18) de façon à engendrer la fermeture de la valve de sécurité (17) en cas d'élévation anormale de la température dans ladite conduite d'alimentation.

12. Appareil de chauffage selon l'une des revendications précédentes, comprenant une vanne commandée de régulation du débit de gaz constituée d'une vanne thermostatique (25) comportant un clapet de fermeture (27), ledit appareil étant caractérisé en ce que ladite vanne thermostatique comporte un dispositif d'ouverture minimale (28 ; 29-32) adapté pour empêcher la fermeture complète du clapet (27) de façon à assurer le passage d'un débit minimal de gaz dans la position fermée de cette vanne (25).

13. Appareil de chauffage selon la revendication 12, caractérisé en ce que le dispositif d'ouverture minimale comprend une vis (28 ; 29) disposé en regard du clapet (27) de la vanne thermostatique (25), et adaptée pour servir de butée audit clapet avant sa fermeture totale.

**Patentansprüche**

1. Heizgerät mit Infrarotstrahlung, insbesondere für den landwirtschaftlichen Sektor zwecks gerichteter Beheizung im Bereich des Bodens von Aufzuchtgebäuden, umfassend :

– eine Zufuhrleitung (3) mit einem Lufteingangsstutzen (5),

– ein Sicherheitsventil (17) mit einem Eingang zur Verbindung mit Gaszuleitmitteln (22) und einem Ausgang zur Verbindung mit Luftleitung (3) über eine Gasinjektionsleitung (24), wobei das besagte Ventil mit einer Vorrichtung versehen ist, die seinen Verschlußkörper in der offenen Lage erhält, sowie mit einer durch einen Temperaturfühler (18) gesteuerten Vorrichtung und einer Öffnungsvorrichtung (19), insbesondere einem manuellen Knopf, mit dessen Hilfe der besagte Verschlußkörper geöffnet werden kann, dadurch gekennzeichnet, daß das Gerät gemeinsam folgende Teile umfaßt:

– eine Reflexionskuppel (1) mit einer Eingangsöffnung für ein Gemisch von Luft und Gas, wobei die besagte Kuppel mit Zufuhrleitung (3) im Bereiche des einen Endes der besagten Leitung fest verbunden und im wesentlichen konzentrisch im Verhältnis zu der besagten Leitung angeordnet ist,

– eine erste Kammer (8), die sogenannte Hauptbrennkammer, deren Form konisch und deren Spitze nach unten gerichtet ist, wobei sich die besagte Kammer im Innern der Kuppel (1) in im wesentlichen konzentrischer Lage im Verhältnis zu dieser befindet, und zwar umfaßt die besagte Kammer eine Wand (9), die sogenannte Grundwand, die im Bereich des Endes der Zufuhrleitung (3) angebracht und mit einer Eingangsöffnung für das Gemisch versehen ist, sowie eine konische Wand (13) aus einem wärmebeständigen und leitfähigen gelochten Material mit einer an Grundwand (9) angebrachten Basis,

– eine zweite Kammer (15), die sogenannte Diffusionsvorkammer, die innerhalb der Hauptbrennkammer (8) angeordnet ist und in einer Wand (16) aus einem wärmebeständigen Material besteht, das mit Löchern versehen ist, deren maximales Öffnungsmaß geringer ist als 1,5 mm, wobei die besagte Wand eine konische Form aufweist und eine nach unten gerichtete Spitze mit einem Spitzenwinkel, der geringer ist als der der konischen Wand (13) der Hauptbrennkammer (8), besitzt und eine Basis umfaßt, deren Durchmesser etwas größer ist als der der Zufuhrleitung (3), an der feuerfesten Grundwand (9) auf im wesentlichen konzentrische Weise im Verhältnis zu der besagten Leitung (3) angebracht,

– in Höhe der Basis der konischen Wand (16) der Diffusionsvorkammer (15) angeordnete Abdichtmittel (12), die so beschaffen sind, daß sie jeden Durchgang des in der Hauptbrennkammer (8) befindlichen Verbrennungsgemisches in die besagte Diffusionsvorkammer (15) verhindern.

2. Heizgerät nach Anspruch 1, dadurch gekennzeichnet:

– daß die Zufuhrleitung (3) einen Endabschnitt besitzt, der in dem Inneren der Kuppel (1), in Diffusionsvorkammer (15), mündet,

– daß die Grundwand (9) in einer feuerfesten Wand besteht, die im Bereiche des Endes der Leitung (3) mit einer Eingangsöffnung für das Gemisch von Luft und Gas versehen ist, so daß sie gemeinsam mit der Kuppel (1) einen Umlaufraum für Brenngase und sekundäre Heißluft abgrenzt,

– daß die Kuppel (1) mit einer Öffnung (2) zur Abfuhr der in dem besagten Raum umlaufenden Brenngase und Heißluft versehen ist.

3. Heizgerät nach Anspruch 2, dadurch gekennzeichnet:

– daß die konische Wand (16) der Diffusionsvorkammer (15) eine mit einem ebenen peripheren Rand (16a) versehene Basis umfaßt, der so beschaffen ist, daß er auf der Grundwand (9) ruht, und zwar auf dem Umfang der Öffnung der besagten Grundwand,

– daß ein Flansch (6) in der Kuppel (1) angeordnet und an der Zufuhrleitung (3) zwischen den besagten Kuppel und der Grundwand (9) so angeschweißt ist, daß sie gemeinsam mit der besagten Grundwand rings um die Leitung (3) einen Innenraum abgrenzt,

– daß die Abdichtmittel einen in dem besagten Innenraum eingeführten Abdichtring umfassen, und zwar am Umfang der Leitung (3), so daß dieser zwischen dem Flansch (6) einerseits und dem peripheren Rand (16a) und der Grundwand (9) andererseits eingeklemmt ist.

4. Heizgerät nach einem der Ansprüche 1, 2 oder 3, dadurch gekennzeichnet, daß die Kuppel (1) einen ebenen Boden (1a) aufweist und daß die Zufuhrleitung (3) die Form eines auf 110° abgebogenen Rohres aufweist.

5. Heizgerät nach einem der vorstehenden Ansprüche, dadurch gekennzeichnet, daß das Verhältnis zwischen den betreffenden Spitzenwinkeln der konischen Wände (13, 16) der Hauptbrennkammer (8) und der Diffusionsvorkammer (15) im wesentlichen zwischen 3,5 und 4,5 beträgt, sowie dadurch, daß die besagten konischen Wände eine im wesentlichen identische Höhe besitzen.

6. Heizgerät nach Anspruch 5, dadurch gekennzeichnet, daß der Spitzenwinkel der konischen Wand (13) der Hauptbrennkammer (8) im wesentlichen 110° entspricht, und daß der Spitzenwinkel der konischen Wand (16) der Diffusionsvorkammer (15) im wesentlichen 27° entspricht.

7. Heizgerät nach einem der vorstehenden Ansprüche, dadurch gekennzeichnet, daß die konische Wand (16) der Diffusionsvorkammer (15) mit kreisförmigen Löchern versehen ist, deren Durchmesser zwischen 0,8 mm und 1 mm beträgt.

8. Heizgerät nach einem der vorstehenden Ansprüche, dadurch gekennzeichnet, daß die feuerfeste Grundwand (9) im Verhältnis zu der Zufuhrleitung (3) so angebracht ist, daß ein Endabschnitt geringer Länge, insbesondere im Bereiche von 2 mm, in der Diffusionsvorkammer (15) mündet.

9. Heizgerät nach einem der vorstehenden Ansprüche, dadurch gekennzeichnet,

– daß die konische Wand (13) der Hauptbrennkammer (8) eine abgestumpfte Spitze hat, die eine Öffnung (14) abgrenzt,

– daß die konische Wand (16) der Diffusionsvorkammer (15) eine Höhe aufweist, die so beschaffen ist, daß sie mit der Öffnung (14) der Hauptbrennkammer (8) bündig ist.

10. Heizgerät nach einem der vorstehenden Ansprüche, dadurch gekennzeichnet, daß die konische Wand (13) der Hauptbrennkammer (8) so beschaffen ist, daß sie kreisförmige, der Höhe nach verteilte Rippen (13a) aufweist.

11. Heizgerät nach einem der vorstehenden Ansprüche, dadurch gekennzeichnet, daß es einen Hochtemperaturthermostaten (21) umfaßt, der an der Zufuhrleitung (3) angeordnet ist und mit dem Temperaturfühler (18) in Verbindung steht, so daß das Sicherheitsventil (17) geschlossen wird, falls die Temperatur in der besagten Zufuhrleitung übermäßig ansteigt.

12. Heizgerät nach einem der vorstehenden Ansprüche, umfassend ein gesteuertes Gasflußregelventil, das in einem thermostatischen Ventil (25) mit einem Verschlußkörper (27) besteht, wobei das besagte Gerät dadurch gekennzeichnet ist, daß das besagte thermostatische Ventil eine Mindestöffnungsvorrichtung (28; 29-32) umfaßt, die so beschaffen ist, daß sie vollkommenes Schließen des Verschlußkörpers (27) verhindert, um den Durchgang eines Mindestgasflusses in der geschlossenen Lage des besagten Ventils (25) zu gewährleisten.

13. Heizgerät nach Anspruch 12, dadurch gekennzeichnet, daß die Mindestöffnungsvorrichtung eine Schraube (28; 29) umfaßt, die sich gegenüber dem Verschlußkörper (27) des thermostatischen Ventils (25) befindet und so beschaffen ist, daß sie als Anschlag für den besagten Verschlußkörper vor dessen vollkommener Schließung dient.

**Claims**

1. A heating apparatus of the infrared type, particularly intended for the agricultural industry for directionally downward heating of breeder buildings, having :

– a feed conduit (3) provided with an air inlet opening (5),

– a safety valve (17) provided with an inlet adapted to be connected to gas feed means (22) and an outlet connected to the air conduit (3) by a gas injection conduit (24), said valve being provided with a member for keeping its valve member in an open position, a member acting as a temperature detector (18), and an opening member (19), in particular a manual button, permitting causing the opening of said valve member, characterized in that it comprises in combination :

– a reflecting dome (1) provided with a gas/air mixture inlet opening, secured to said feed conduit (3) at an end thereof, and arranged essentially concentrically with respect to said conduit,

– a first chamber (8), called a primary combustion chamber having a conical shape pointed downwardly and arranged on the interior of the dome (1) approximately concentrically with respect to the latter, said chamber comprising a wall (9) called the base, fixed at the end of the feed conduit (3) and provided with a mixture inlet opening, and a conical wall (13) of a perforate conducting material, resistant to heat, provided with a base secured to the base wall (9),

– a second chamber (15) termed a diffusion prechamber, arranged in the primary combustion chamber (8) and comprising a wall (16) of a heat resistant material, perforated with holes having a maximum dimension of the opening of less than 1.5 mm, said wall having a conical shape, pointed downwardly, with an apex angle less that of the conical wall (13) of the primary chamber (8), and comprising a base of a diameter slightly greater than that of the feed conduit (3), secured to the refractory wall of the base (9) approximately concentrically with respect to this conduit (3),

– seal means (12) arranged at the level of the base of the conical wall (16) of the diffusion prechamber (15) and adapted to prevent all passage of the mixture in combustion in the primary combustion chamber (8) to the interior of said diffusion pre-chamber (15).

2. A heating apparatus as in Claim 1, characterized in that :

– the feed conduit (3) has an end portion opening to the interior of the dome (1), in the diffusion prechamber (15),

– the base wall (9) comprises a refractory wall provided with a gas/air mixture inlet opening and secured to the end of the conduit (3) in such a manner as to define with the dome (1) a volume for circulation of burning gas and hot secondary air,

– the dome (1) is provided with an evacuation opening (2) for burning gases and hot air circulating in said volume.

3. A heating apparatus as in Claim 2, characterized in that :

– the conical wall (16) of the diffusion pre-chamber (15) comprises a base provided with a flat peripheral flange (16a) adapted to rest on the base wall (9) on the periphery of the opening of the latter,

– a collar (6) is arranged in the dome (1) and soldered on the feed conduit (3), between said dome and the base wall (9) in such a manner as to define therewith an internal volume around the conduit (3),

– sealing means comprising a gasket inserted in said internal volume on the periphery of the conduit (3), in such a manner as to be compressed between the collar (6) and the peripheral flange (16a) and the base wall (9).

4. A heating apparatus as in one of Claims 1, 2, or 3, characterized in that the dome (1) has a flat bottom (1a) and in that the feed conduit (3) has the shape of a 110° pipe elbow.

5. A heating apparatus as in one of the preceding claims, characterized in that the ratio between the apex angles of the conical walls (13, 16) respectively of the primary combustion chamber (8) and the diffusion pre-chamber (15) comprises approximately between 3.5 and 4.5, and said conical walls have approximately identical heights.

6. A heating apparatus as in Claim 5, characterized in that the apex angle of the conical wall (13) of the primary combustion chamber (8) is approximately equal to 110° and the angle at the apex of the conical wall (16) of the diffusion pre-chamber (15) is approximately equal to 27°.

7. A heating apparatus as in one of the preceding claims, characterized in that the conical wall (16) of the diffusion pre-chamber (15) is perforated with circular holes of a diameter between 0.8 mm and 1 mm.

8. A heating apparatus as in one of the preceding claims, characterized in that the refractory wall of the base (9) is secured with respect to the feed conduit (3), in such a manner that a portion of the end of slight length, particularly on the order of 2 mm, extends into the diffusion pre-chamber (15).

9. A heating apparatus as in one of the preceding claims, characterized in that:

– the conical wall (13) of the primary combustion chamber (8) has a truncated apex defining an orifice (14),

– the conical wall (16) of the diffusion pre-chamber (15) has a height adapted to extend to the orifice (14) of the primary combustion chamber (8).

10. A heating apparatus as in one of the preceding claims, characterized in that the conical wall (13) of the primary radiation chamber (8) is shaped in such a manner as to have circular ribs (13a) distributed along its height.

11. A heating apparatus as in one of the preceding claims, characterized in that it comprises a high temperature thermostat (21) arranged on the feed conduit (3) and associated with the temperature detector (18) in such a manner as to cause the closing of the safety valve (17) in case of abnormally high temperature in said feed conduit.

12. A heating apparatus as in one of the preceding claims, and comprising a control valve for regulating the flow of gas constituted by a thermostatic valve (25) comprising a closure member (27), said apparatus being characterized in that said thermostatic valve comprises a minimum opening apparatus (28; 29-32) adapted to prevent the complete closing of the closure member (27) in such a manner as to assure the passage of a minimum flow of gas in the closed position of this valve (25).

13. A heating apparatus as in Claim 12, characterized in that the minimum opening device comprises a screw (28; 29) arranged opposite the valve member (27) of the thermostatic valve (25) and adapted to serve as a stop member for said valve member before its complete closure.

Fig 1

Fig 2

Fig 3

Fig 4